# EUROPEAN PATENT SPECIFICATION

(11) **EP 3 619 421 B1**
(45) Date of publication and mention of the grant of the patent: **14.07.2021**
(21) Application number: 18755702.0
(22) Date of filing: 10.07.2018
(51) Int. Cl.: F03B 13/26, F03G 3/02

(54) **AREA OF USE IN TIDAL MANIPULATION**
NUTZUNGSBEREICH FÜR GEZEITENMANIPULATION
ZONE D'UTILISATION POUR MANIPULATION DE MARÉE

(30) Priority: 06.10.2017 GB 201716923
(43) Date of publication of application: 11.03.2020
(73) Proprietor: Lombard, Peter Thomas, Gibraltar GX11 1AA (GI)
(72) Inventor: Lombard, Peter Thomas, Gibraltar GX11 1AA (GI)
(86) International application number: PCT/EP2018/000351
(87) International publication number: WO 2019/068361

(56) References cited:
- WO-A2-2010/024623
- DE-C- 472 394
- GB-A- 2 506 230
- JP-A- 2001 090 649
- JP-A- 2001 323 869
- US-A- 3 959 663
- US-A- 4 074 526

## Description

### Background.

My idea came about after researching the tide levels around the world. In some places the difference between high and low tide levels can be as great as 14 metres. I calculated the high and low points of different tide levels in Amherst Point, Nova Scotia, Canada for 2016 using this area as an example. I then extracted from these figures what the lowest high tide level would be. Similarly I then extracted the figures for the highest low tide level. These levels will create between them a working area of tidal water which will be constant throughout the year providing green energy 24 hours a day.

My invention differs from background art such as DE 472 394 C (Antenor Assorati)(1929-02-27), JP 2001 090649 A (Uchisawa Ryoichi; Sakai Ichiro) (2001-04-03) and US 4 074 526 A (West William) (1978-02-21) as none of them use the"Area of Use in Tidal Manipulation" , which is the area lying between the highest low tide and the lowest high tide of the same year, used within docks, which ensures a constant working volume of water throughout the year and allows for the system to be used independently of actual tide. The hinge-decks on the hinge-deck barges allow efficient unloading, and a timed second by second delivery of weights is also distinctive. Another distinguishing feature is the inclusion of water valves in the sea wall, with inlet/outlet capacity, to allow or stop access to the individual docks from the outer sea levels.

### Statement of Invention.

Noting this I have created an environmental, low impact system called the "Area of Use in Tidal Manipulation" with reference to a layer of tidal water which I will use. This Area will be channelled and controlled by individual water valves built into a sea wall, each water valve serving an individual dock, allowing or stopping the entry of tidal waters. These individual docks are built into an enclosure . Within these individual docks individual hinge-decked barges
will rise to the high point, which is the "Unloading Point", allowed by the "Area of Use in Tidal Manipulation" carrying
within them round weights. These round weights, on reaching the highest water level in the Area of Use in Tidal Manipulation will be offloaded onto an adjacent platform, at the Unloading Point by using hinged decks built into the barges.

The platform will have automated guiding barriers behind the Unloading Point to control the round weights allowing them to roll down to an aperture, to enter at a time-released rate, within which kinetic energy will be converted into electricity by using a generator connected to a ladle wheel. After this point the round weights will roll down to the area I shall call the Collecting Point, again to be controlled by automated guiding barriers, where they will be picked up by another hinge-deck barge so the cycle can recommence . The cycle consist of :-
A rising water level within a dock, allowed by an open water valve, raising a hinge-deck barge with round weights to the Unloading Point on a platform.

The offloading of the round weights at the Unloading Point using a hinged deck within the barge.

The channelling of the round weights controlled by automated guiding barriers down a slope into an aperture leading into a ladle wheel.

Kinetic energy being harnessed by the ladle wheel, connected to a generator, driven by the round weights. Exiting through a lower aperture the round weights will roll onto the top of another slope where they will roll down to a second set of automated guiding barriers, which will guide the round weights down to the waiting hinge-deck barges at the Collecting Point.

Any hinge-deck barge, once full of round weights will be raised once more by the rising tidal water which is siphoned through water valves within each dock.

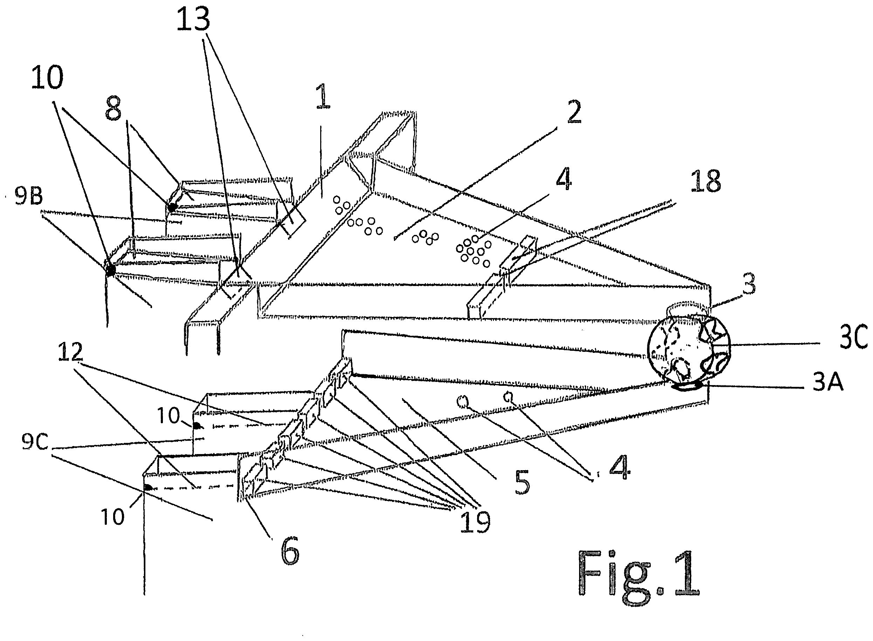

What follows is a detailed description of my concept using drawings, Figures 1 to 12 on pages 1 to 11.
Figure 1 shows the inner view of the system.
Figure 1 number 1 shows the entry point where the hinge-decked barges let the round weights roll out to the platforms' Unloading Point, onto the upper slope where they will be controlled by the automated guiding barriers.
Figure 1 number 2 shows how the upper floor of the platform lies at an angle allowing the round weights to roll and also acts as a holding area.

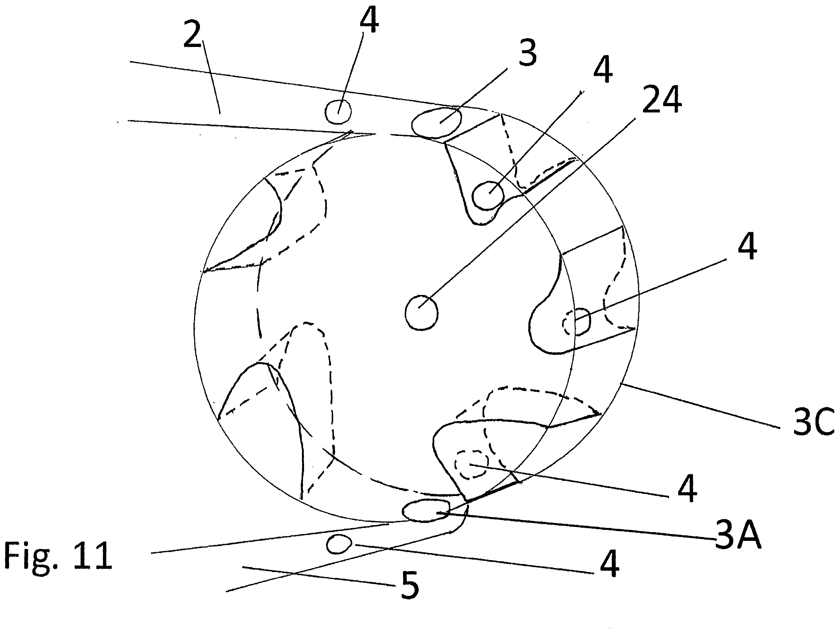

Figure 1 number 3 shows the upper aperture, underneath which lies the ladle wheel, which is 3C and is 4 metres high, were the round weights will pass through at a constant rate of one per second. Figure 1 number 3A shows the lower exit aperture of the ladle wheel. Figure 11 explains the inner workings of the ladle wheel.
Figure 1 number 4 shows the round weights rolling .They are all the same size and the same weight.
Figure 1 number 5 shows how the lower slope of the platform is angled to help the round weights roll out into waiting hinge-deck barges, guided by the automated guiding barriers.
Figure 1 number 6 shows the lower exit, called the Collection Point, through which the round weight will roll into the waiting hinge-deck barges.
Figure 1 number 8 shows the hinged deck at its position 8 to help weights roll out to the Unloading Point and holding area.
Figure 1 number 12 shows the hinged-deck barge lying at its level position.
Figure 1 number 13 shows flaps which will be lowered from the barge onto the platform for the round weights to roll out.
Figure 1 number 18 shows the automated guiding barriers which will control the flow of round weights towards the aperture.
Figure 1 number 19 shows automated guiding barriers which will allow the round weights to roll towards the awaiting empty hinge-deck barges.
Figure 1 number 9B shows hinge-deck barges unloading round weights at the Unloading Point.
Figure 1 number 9C shows hinge-deck barges ready to collect the round weights at the Collecting Point.
Figure 2 shows a view of a hinge-decked barge, 9B, at the Unloading Point unloading round weights.

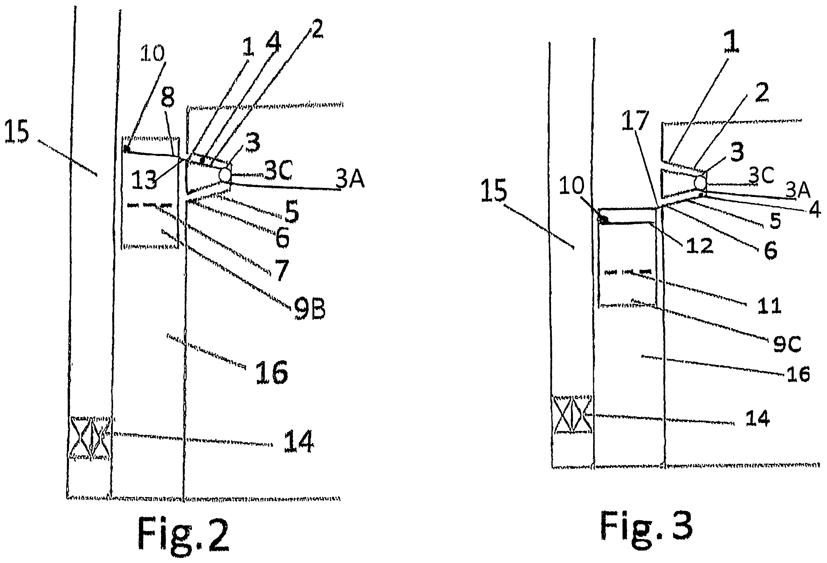

Figure 2 number 7 shows high water level within that dock, which is the lowest high tide level within a year.
Figure 2 number 10 shows the hydraulic hinge, which will release hydraulic pressure making the deck go to position 8 which will allow the round weights to roll out of the hinge-decked barge onto the upper slope and Unloading Point of the platform.
Figure 2 number 14 shows the inlet/outlet water valve built into the sea wall within each individual dock .
Figure 2 number 15 shows the enclosure which the sea wall with water valves is built into.
Figure 2 number 16 shows the individual dock .
Figure 3 shows a view of the hinge-decked barge,9C, at low water level, at its Collecting Point, within the dock collecting the round weights. The description of Figure 3 will omit numbers previously described on Figures 1 and 2.
Figure 3 number 11 points out the low water level within that particular dock ,which is the highest low tide level within a year.
Figure3 number 17 shows flaps which will be lowered from the platform to the hinge-deck barge so the weights will roll onto the hinge-deck barge.

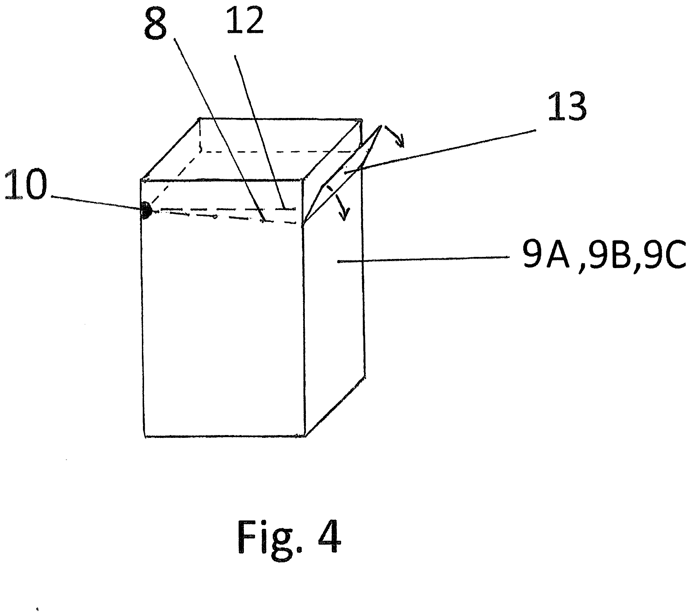

Figure 4 is a view of the hinge-decked barge, 9A,9B,9C ,with hydraulic hinge, 10, and the barge deck at both positions, numbered 12 and 8.
   The deck at position 12 will be level, for the round weights to fall in.
   The deck angled at position 8 will help the round weights roll out of the hinge-deck barge. Previously described in Figure 2.
Figure 4 number 13 is a flap which will be lowered from the hinge-deck barge onto the lip of the Unloading Point.

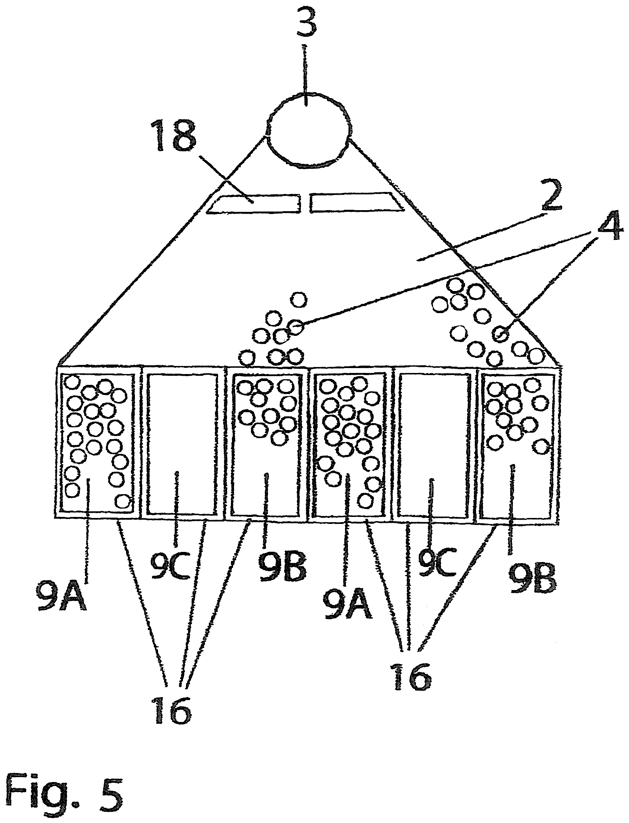

Figure 5 shows the upper view of the system viewed from above where you can see six hinge-deck barges within six individual docks. This number of docks is just an example as there could be an unlimited number of docks.
Fig.5 number 3 is the aperture at the end of the upper slope of the platform.

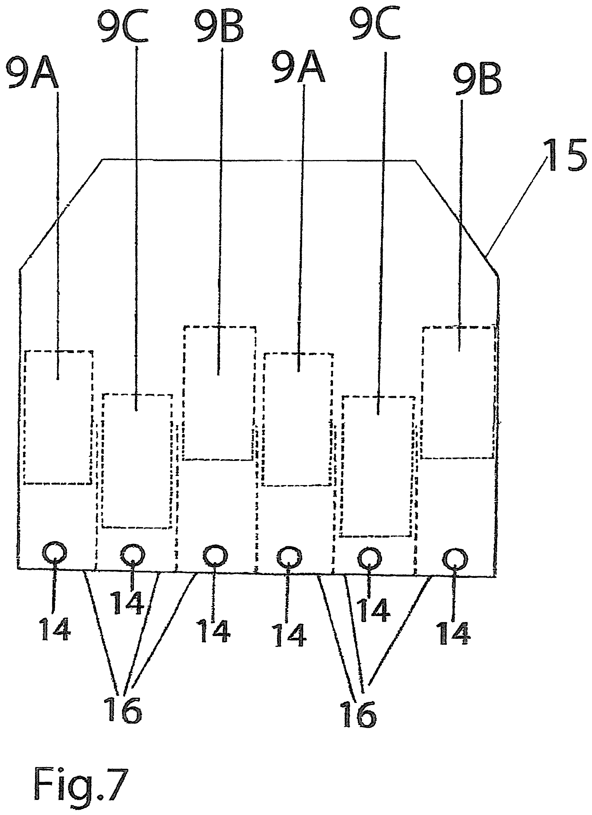

Figure 5 number 16 shows six individual docks each dock containing a hinge-decked barge . The hinge-deck barges have been numbered . Two are 9A, two are 9B and two are 9C as explained in Figure 7.
Figure 5 number 18 shows individual automated guiding barriers which will hold/ control the flow of round weights towards the aperture.

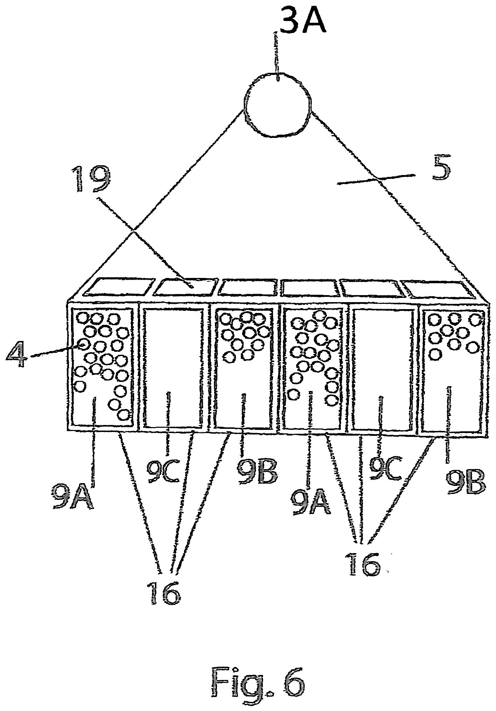

Figure 6 shows a view of the lower floor.
Figure 6 number 19 shows the line of individual automated guiding barriers which control the flow of round weights to the empty, waiting hinge-decked barges.
Fig. 6 number 3A shows the lower aperture.
   Numbers previously described in Figure 5 have been omitted.
   The description of Figure 7 will omit numbers previously described.
Figure 7 shows the view from the seaward side of the individual hinge-decked barges and individual docks. These are marked with dotted lines to indicate that they would not be visible from this point of view as they would be lying behind the sea wall which would separate the inner dock from outer tidal waters.
   The hinge-decked barges numbered 9A are rising, as their docks' water valves are open and the docks' water level is rising, and they are on their way up to unload the round weights at the Unloading Point.
   Hinge-deck barges numbered 9B are unloading at the Unloading Point, at high water level for their individual docks, with their docks' water valves closed.
   Hinge-deck barges numbered 9C are ready to collect the round weights at the Collecting Point. They are at the low water level for their individual docks, with their docks' water valves closed.
Figure 7 number 14 shows the individual water valves built into the sea wall on each individual dock. These individual water valves serve to control the delivery and collection of the round weights by allowing or stopping access from the outer sea levels.
Figure 7 number 15 shows the systems' enclosure which has the sea wall with water valves with inlet/outlet capacity built into it.

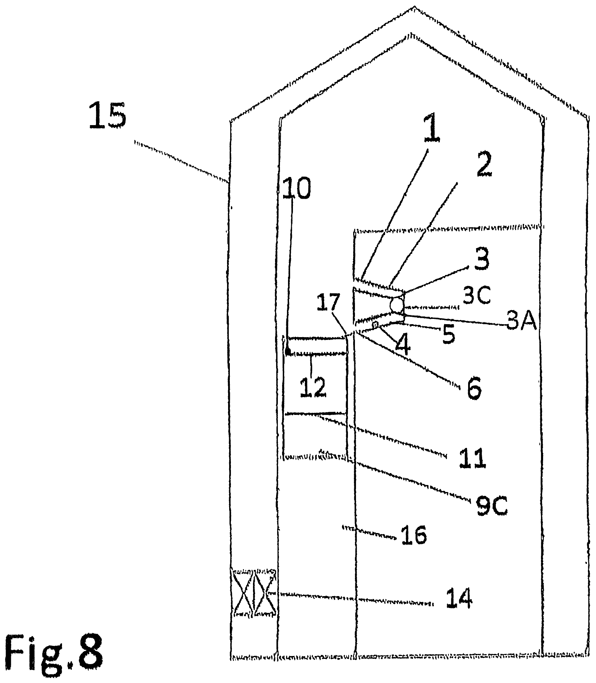

Figure 8 shows the side view of the system where the hinge-decked barges 9C are at the Collecting Point.
Figure 8 number 17 shows the flap which will be lowered from the platform to the hinge-decked barge so the weights will roll onto the hinge-decked barge.
Figure 8 number 15 shows the enclosure for the system which will protect it from the elements, it is also a sea wall built here on land. It could also be built around an oil rig type structure.

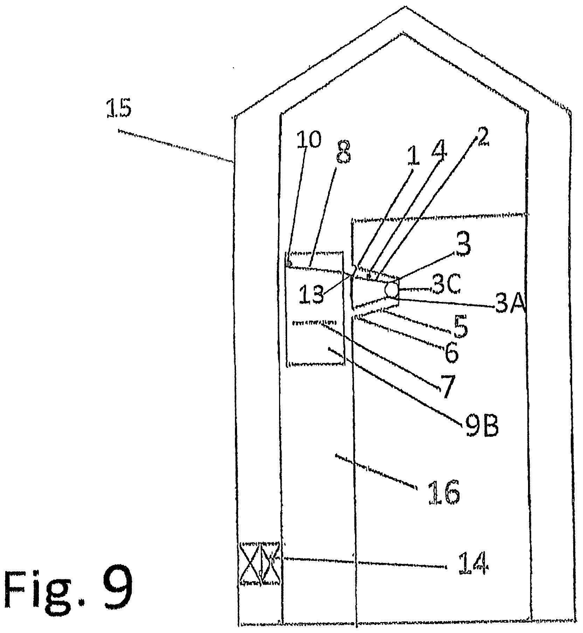

Figure 9 is a side view of the system where the hinge-decked barge, 9B at Unloading Point as referenced in figure 7, is
   unloading the round weights within that individual dock with its closed water valves.
   All other numbers in Fig9 are described above.

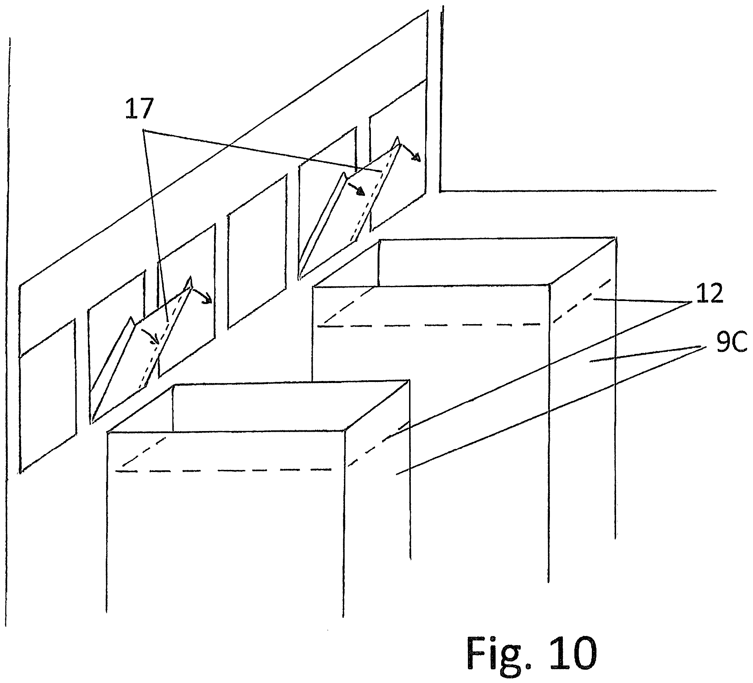

Figure 10 shows barges 9C at the Collecting Point. Their docks' water valves are closed.
Figure 10 number 17 shows the flaps on the platform which will be lowered onto the edge of the hinge-deck barge allowing the round weights to roll into the barge.
Figure 11 explains the purpose of the ladle wheel,3C through which the round weights will roll into.Their weight forces down the ladles turning the ladle wheel thereby converting kinetic energy into electricity.
Figure 11 number 24 is the drive shaft for the ladle wheel which is connected to a generator.
   All other numbers in Fig 11 have been previously described above.

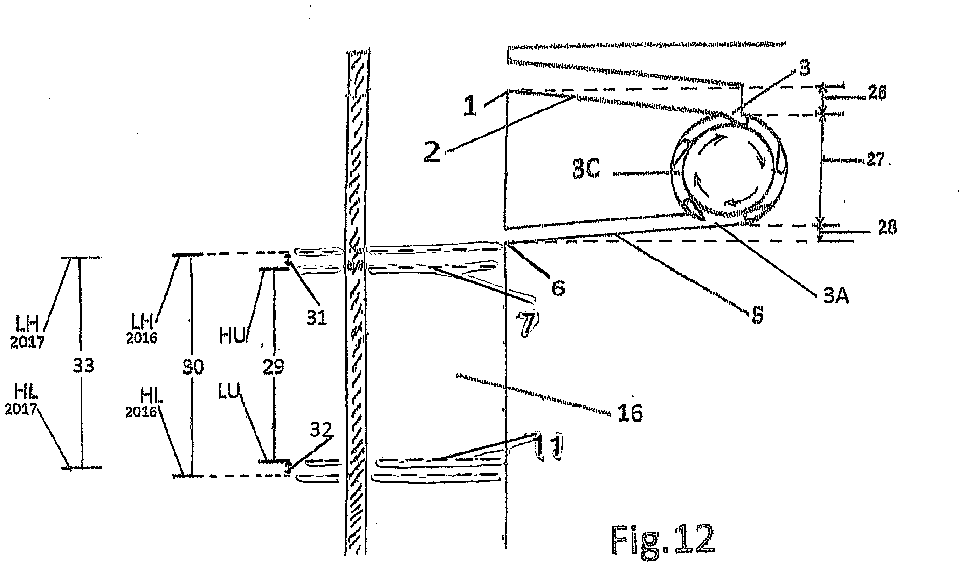

Figure 12 shows measurements for the platform and tidal levels including measurements for the Area of Use in Tidal Manipulation
Figure 12 number 7 represents the level of the lowest high tide used, shown as a broken line.
Figure 12 number 11. represents the level of the highest low tide used, shown as a broken line.
Figure 12 Number 26 represents the measurement taken from number 1, the Unloading point (entry point), to number 3, the upper Aperture, and is 1 metre high.
Figure 12 number 27 represents the measurement taken from number 3, the upper Aperture, to the bottom of 3C, the ladle wheel,(where 3A the lower Aperture is) and is 4 metres high .
Figure 12 number 28 represents the measurement taken from the lower aperture 3A, to number 6, the Collection Point (exit point) and is 1/2 metre high.
Figure 12 number 29 depicts the Area of Use in Tidal Manipulation. In this figure the Area of Use in Tidal Manipulation measures 7.05 metres
Figure 12 number 30 represents the measurement of the minimum distance between the lowest high tide, LH (on February Tuesday 2nd at 7.12 pm measuring 11.27metres)shown on page B in Tidal Calendar 2016 and the highest low tide, HL (on October Sunday 9th at 12.59pm measuring 3.18 metres) for the year 2016 shown on page I in Tidal Calendar 2016 . This left a distance between these measurements of 8.09 metres. The system will only be using 7.05 metres out of the 8.09 metres as there is a tolerance of half a metre given to the upper and lower limits of the Area of Use in Tidal Manipulation.
Figure 12 number 31 represents with a broken line the half metre tolerance given to the Highest Use (HU) level.
Figure 12 number 32 represents with a broken line the half metre tolerance given to the Lowest Used (LU) level.
Figure 12 number 33 represents the measurement, for the year 2017, for the minimum predicted difference between lowest high tide, LH (February, Monday 20th at 7.38pm measuring 11.21 metres) shown on page B in Tidal Calendar 2017 and highest low tide ,HL (September Friday 29th at 2.03pm measuring 3.29 metres) shown on page I Tidal Calendar 2017 and also on October, Saturday 28th at 1.20pm measuring 3.29 metres)for 2017 also shown on page I Tidal Calendar 2017 .This left a difference between these two measurements of 7.92 metres.

The measurements for 2016 and 2017 are both consistent with my Area of Use in Tidal Manipulation throughout the year.

The following tidal dates, from Saturday March 12th at 9.16pm 2016 to Sunday 13th March at 10.45am 2016,will be the ones I use to explain the cycle as they were the longest time for a tidal cycle to occur in 2016 shown on page C of the 2016 Tidal Calendar. The length of time it took was approximately 13 hours 29 minutes. My thinking has been to equate seconds to weights. If the time taken was 13hours and 29 minutes this can be equated to 48.540 weights.

Further examples of the equation between weights and time:-
55,800 weights= 15 and 1/2 hours
50,400 weights= 14 hours
48,540 weights= 13hours, 29 minutes
25,200 weights= 7 hours
18,000 weights =5 hours
12,600 weights= 3 and 1/2 hours
5,400 weights = 1 and 1/2 hours

The above examples will be used to explain a cycle of my system. Figure 7 best represents this explanation.

We start this explanation at the Collecting Point where hinge-deck barges 9C will start collecting weights until the next tide rises while the water valves for their docks are closed. The next tide will be in 13 hours and 29 minutes equated to 48,540 weights. Each 9C hinge-deck barge will collect 24,270 weights.

The hinge-deck barges 9A will rise with the tide, because their docks have opened their water valves, taking approximately 3 and 1/2 hours to get to the Unloading Point.

They are fully loaded and rising with 50,400 weights. Each 9A hinge-deck barge will carry 25,200 weights.

Hinge-deck barges 9B are at the Unloading Point with 5 hours worth of weights, 18,000. The docks where the 9B hinge-deck barges lie will have closed water valves . Each 9B hinge-deck barge will contain 9,000 weights.

By the time hinge-deck barges 9A reach the Unloading Point the 9B hinge-deck barges will have been at the Unloading Point for 3 and a 1/2 hours and 12,600 weights will have passed through the ladle wheel and there will only be 1 and 1/2 hours left worth of weights, 5,400, in the Holding Area.

Hinge-deck barges 9A reach the Unloading Point with 50,400 weights, 14 hours worth, and the 9A docks' water valves are
then closed. Each 9A hinge-deck barge carrying 25,200 weights, which can be added to the 5,400 weights, 1 and 1/2 hours, still remaining in the Holding Area. So now there are 15 and 1/2 hours worth of weights, 55,800 with only 13 hours and 29 minutes to wait before another two full hinge-deck barges arrive at the Unloading Point.

When the tide goes down the water valves of the docks that hinge-deck barges 9B lie in are opened and the docks' water level goes down the 9B hinge-deck barges will descend with the tide and stop at the Collecting Point and the water valves in their docks will then be closed .They will not collect any weights until the tide takes hinge-deck barges 9C up. When the rising tide reaches the Collecting Point the docks where 9C hinge-deck barges lie will open their water valves and will raise the 9C hinge-deck barges up to the Unloading Point with approximately 48, 540 weights, each 9C hinge-deck barge with approximately 24,270 weights, which they have collected in the last 13 hours 29 minutes approximately.

Once hinge-deck barges 9C rise the cycle restarts.

It will be appreciated by those skilled in the art that certain specific embodiments of the principles of the invention have been described above but these are intended merely as examples of how those principles may be applied and that there are many different modifications and variations which may be made within the scope of the invention. The above description should not be considered as limiting but merely illustrative.

## Claims

1. An automated system using tidal waters and weights suitable to provide electricity 24 hours a day, said system comprising:
a specific layer of tidal water; a series of separate individual docks (16) built into an enclosure with a sea wall (15) separating said docks from outer tidal waters; each dock comprising a water valve (14) built into said sea wall ;a plurality of time-released round weights (4) uniform weight and size ;
a series of hydraulic hinged-decked barges (9A, 9B, 9C) with flaps (13) each within a separate dock (16);
such separate docks to lie at right angles to a platform; said platform to have an upper unloading point (1) at which the round weights (4) are offloaded from the barges (9A, 9B, 9C) using said hinged decks; said platform leading said round weights (4) onto a downward slope (2) with a first set of automated guiding barriers (18);
said slope to end in an upper aperture (3); said upper aperture to lie above a ladle wheel (3C); said ladle wheel
being driven by the round weights (4) and connected to a generator by a drive shaft and to lie above a lower aperture (3A) through which the round weights exit said lower aperture lying at the top of a second downward slope (5);
said slope ending in a second set of automated guiding barriers (19) configured to guide the round weights (4) to the waiting hinged-deck barges at a lower collecting point (6).

2. A system as in claim 1 configured to use a combination of neap tides which lie between the highest low tide and the lowest high tide.

3. A system as in claim 1 where each water valve (14) has inlet/outlet capacity and is built into its sea wall (15) thereby connecting and regulating each individual docks' access to the sea.

4. A system as in claim 1 which will have a barge (9A, 98, 9C) with a hydraulic-hinged deck, with flap (13) to lower onto the unloading point (1) within each individual dock.

5. A system as in claim 1 which will have at its collecting point (6) a flap to lower onto the waiting hinge-deck barge .

6. A method for producing electricity using the system of claim 1, the method comprising in a first step: hinge-decked barges (9A) will rise with water level, as their docks' water valves (14) on the sea wall (15) are open to allow tidal waters, to unload the round weights once they have reached the unloading point (1); in a second step on reaching the unloading point (1) the hinge-decked barges (9A) will use their hydraulic hinges to lower their decks and then lower their flaps (13) onto the platform enabling the round weights (4) to roll over the flaps (13) and onto the platform and their docks' water valves will be shut; in a step to run concurrently with step two, hinge-deck barges (9B) which are empty at the unloading point (1) will raise their flaps, level their decks and descend with the tide, as their docks' water valves (14) on the sea wall (15) are open and the tide is receding, to the collecting point (6); in a further step the weights (4) unloaded by hinge-deck barges (9A) will roll down a first slope (2) there to be controlled and guided by the automated guiding barriers (18) towards the upper aperture (3) into which they will drop at a time-released rate of 1 per second and onto the ladle wheel (3C) connected to the generator by the drive shaft thereby creating electricity; in a further step the round weights will roll out of the lower aperture (3A) after they have passed through the ladle wheel (3C), to roll down the second slope towards the second set of automated guiding barriers to be controlled and guided towards the lower collecting point (6) in a further step the round weights (4) will roll over the collecting point (6) flap into hinge-deck barges (9C) waiting at the collecting point (6) at low water level for their individual docks with their docks' water valves on the sea wall closed; running concurrently with the last step is the arrival of hinge-deck barges (9B) at the collecting point (6), their docks' water valves will then close and the flap from the collecting point (6) will be lowered onto hinge-deck barges (9B) but no round weights will be collected until the flaps from the collecting point (6) are raised from hinge-deck barges (9C) and their docks' water valves open; in the next step when hinge-deck barges (9C) rise with the tide (9B) will start collecting weights (4) and all previous steps are then repeated.

## Patentansprüche

1. Ein automatisiertes System, das mit Tidewasser und geeigneten Gewichten 24 Stunden am Tag Elektrizität liefern kann. Das System umfasst die folgenden Merkmale:
eine spezifische Schicht Tidewasser;
eine Reihe einzelner Docks (16) in einer Anlage mit Außenmohle (15), die die Docks von den äußeren Tidewassern trennt; in jedem einzelnen Dock (16) befinden sich
ein in die Außenmohle (15) eingebautes Wasserventil (14);
eine Reihe von zeitgesteuerten Rundgewichten (4) mit einheitlichem Gewicht und von einheitlicher Größe;
eine Reihe von hydraulischen Klappschuten (9A 9B 9C) mit Klappen (13), die sich jeweils in einem individuellen Dock (16) befinden; diese einzelnen Docks (16) liegen im rechten Winkel zu einer Plattform; besagte Plattform hat oben eine Entladestelle (1), an der die Rundgewichte (4) von den Schuten (9A 9B 9C) abgeladen werden;
ein erstes Set automatisierte Leitschranken (18) leitet die Rundgewichte (4) von der Plattform auf eine nach unten führende Rampe (2); die Rampe endet an einer oberen Öffnung (3);
besagte obere Öffnung (3) befindet sich über einem Schöpfrad (3C); das Schöpfrad (3C) wird von den Rundgewichten (4) angetrieben und ist über eine Antriebswelle mit einem Generator verbunden. Es liegt oberhalb einer unteren Öffnung (3A), durch die die Rundgewichte (4) austreten; diese untere Öffnung (3A) befindet sich oberhalb einer zweiten nach unten führenden Rampe (5); am Ende dieser Rampe (5) befindet sich ein zweiter Satz automatisierter Leitschranken (19). Dieser ist so konfiguriert, dass er die Rundgewichte (4) an einem unteren Sammelpunkt (6) zu den bereitliegenden Klappschuten (9A 9B 9C) leitet.

2. Das automatisierte System gemäß Merkmale 1, konfiguriert für die Nutzung einer Kombination von Nipptiden, die zwischen dem höchsten Ebbe- und dem niedrigsten Flutstand liegen.

3. Das automatisierte System gemäß Merkmale 1, bei dem jedes, in seine Außenmohle (15) eingebaute Wasserventil (14) Einlass- / Ablasskapazität hat, wodurch die Verbindung jedes einzelnen Docks (16) mit dem Meer reguliert wird.

4. Das automatisierte System gemäß Merkmale 1, das hydraulische Klappschuten (9A 9B 9C) mit hydraulischem Klappdeck (10) und einer auf die Entladestelle (1) absenkbaren Klappe (13) hat.

5. Das automatisierte System gemäß Merkmale 1, das an seiner Sammelstelle (6) eine Klappe (17) zum Absenken auf die wartende hydraulische Klappschute (9A 9B 9C) hat.

6. Ein Verfahren zur Erzeugung von Elektrizität unter Verwendung des automatisierten Systems gemäß Merkmale 1. Das Verfahren läuft in einem ersten Schritt wie folgt ab:
Die Klappschuten (9A) werden mit dem Wasserstand angehoben, da die Wasserventile (14) in der Außenmohle (15) der einzelnen Docks geöffnet sind, um das Tidewasser einzulassen;
bei Erreichen der Entladestelle (1) werden in einem zweiten Schritt die Wasserventile (14) der hydraulischen Klappschuten (9A) geschlossen. Dann senken ihre hydraulischen Scharniere (10) ihre Decks ab und senken ihre Klappen (13) auf die Entladestelle (1) auf der Plattform. Dadurch können die Rundgewichte (4) über die Klappen (13) und auf die Plattform rollen;
in einem zeitgleich mit dem zweiten Schritt ablaufenden Vorgang ziehen die an der Entladestelle (1) leeren hydraulischen Klappschuten (9B) ihre Klappen (13) hoch, richten ihre Decks aus und sinken mit der zurückgehenden Tide zur Sammelstelle (6) ab, da die Wasserventile (14) in der Außenmohle (15) ihrer jeweiligen Docks (16) geöffnet sind;
in einem nächsten Schritt rollen die Rundgewichte (4) von den Klappschuten (9A) auf die erste Rampe (2) hinunter. Dort werden sie von den automatisierten Leitschranken (18) gesteuert und zur oberen Öffnung (3) geleitet. Hier fällt zeitgesteuert 1 Gewicht pro Sekunde auf das Schöpfrad (3C), das über die Antriebswelle mit dem Generator verbunden ist und dadurch Strom erzeugt;
nachdem sie das Schöpfrad (3C) passiert haben, rollen die Rundgewichte in einem nächsten Schritt aus der unteren Öffnung (3A) hinaus auf die zweite Rampe (7) in Richtung des zweiten Satzes an automatischen Leitschranken (19).
Von dort werden sie in Richtung der unteren Sammelstelle (6) geleitet;
im nächsten Schritt rollen die Rundgewichte (4) über die Klappe (17) der Sammelstelle (6) in die hydraulischen Klappschuten (9C), die an der Sammelstelle (6) ihrer jeweiligen Docks (16) bei niedrigem Wasserstand mit geschlossenen Wasserventilen (14) in der Außenmohle (15) warten;
gleichzeitig mit dem letzten Schritt erreichen die hydraulischen Klappschuten (9B) die Sammelstelle (6). Die Wasserventile (14) ihrer jeweiligen Docks (16) werden geschlossen und die Klappe (17) wird von der Sammelstelle (6) auf die Klappschuten (9B) abgesenkt.
Die automatisierten Leitschranken (19) der zweiten Rampe (5) werden erst geöffnet, wenn die automatisierten Leitschranken (19) der Klappschuten (9C) geschlossen sind. Es werden keine Rundgewichte (4) aufgenommen, bis die Klappen (17) an der Sammelstelle (6) von den hydraulischen Klappschuten (9C) angehoben und deren Wasserventile (14) geöffnet sind;
beim nächsten Schritt steigen die hydraulischen Klappschuten (9C) mit der Flut. Die hydraulischen Klappschuten (9B) beginnen dann mit dem Aufnehmen der Rundgewichte (4) an der Sammelstelle (6). Anschließend werden alle vorherigen Schritte wiederholt.

## Revendications

1. Système automatisé utilisant les eaux de marée et des poids appropriés pour fournir de l'électricité 24 heures sur 24, ledit système comprend :
une couche spécifique d'eau de marée ;
une série de quais séparés (16), formant
une enceinte, avec une digue de mer (15) séparant lesdits quais des eaux de marée extérieures ; chaque quai séparé (16) comprenant
une vanne d'eau (14) intégrée à ladite digue (15) ;
un certain nombre de poids ronds (4) libérés au fil du temps, de poids et de taille uniforme ;
une série de barges à pont articulé hydraulique (9A, 9B, 9C) avec des clapets (13), chacun à l'intérieur d'un quai séparé (16) ; ces quais séparés (16) se trouvant à angle droit par rapport à une plate-forme ; ladite plate-forme devant avoir
un point de déchargement supérieur (1) au niveau duquel les poids ronds (4) sont déchargés des barges (9A, 9B, 9C) ; ladite plate-forme guidant lesdits poids ronds (4) vers
une pente descendante (2) avec
un premier ensemble de barrières de guidage automatisées (18) ; ladite pente se terminant par
une ouverture supérieure (3) ; ladite ouverture supérieure (3) se trouvant au-dessus
d'une roue à poche (3C) ; ladite roue à poche (3C) étant entraînée par les poids ronds (4) et reliée à un générateur par un arbre d'entraînement et se trouvant au-dessus
d'une ouverture inférieure (3A) à travers laquelle sortent les poids ronds (4) ; ladite ouverture inférieure (3A) située au sommet
d'une deuxième pente descendante (5) ; ladite pente descendante (5) se terminant par
un deuxième ensemble de barrières de guidage automatisées (19) configurées pour guider les poids ronds (4) vers les barges à pont articulé hydraulique en attente (9A 9B 9C) à
un point de collecte plus bas (6).

2. Système automatisé selon la revendication 1, configuré pour tirer profit d'une combinaison de marées de mortes-eaux situées entre la marée basse la plus haute et la marée haute la plus basse.

3. Système automatisé selon la revendication 1, dans lequel
chaque vanne d'eau (14) dispose d'une capacité d'entrée/de sortie et est intégrée à sa digue (15), reliant et régulant ainsi l'accès à la mer de chaque quai séparé (16).

4. Système automatisé selon la revendication 1, qui comporte des barges (9A, 9B, 9C) à pont articulé hydraulique (10), avec un clapet (13) à abaisser sur le point de déchargement (1).

5. Système automatisé selon la revendication 1, qui comporte, à son point de collecte (6), un clapet (17) destiné à s'abaisser sur la barge (9A, 9B, 9C) à pont articulé hydraulique en attente.

6. Procédé de production d'électricité reposant sur le système automatisé de la revendication 1, le procédé comprend dans une première étape : les barges (9A) à pont articulé hydraulique qui s'élèvent avec le niveau de l'eau, étant donné que les vannes d'eau (14) de leurs quais séparés sur la digue (15) sont ouvertes pour permettre aux eaux de marée d'entrer ; dans un deuxième temps, en atteignant le point de déchargement (1), les vannes d'eau (14) des barges (9A) à pont articulé hydraulique sont fermées, puis elles utilisent leurs articulations hydrauliques (10) pour abaisser leur pont et leurs clapets (13) au niveau du point de déchargement (1) de la plate-forme permettant ainsi aux poids ronds (4) de rouler sur les clapets (13) et sur la plate-forme ;
dans une étape devant se dérouler en même temps que la deuxième étape, des barges à pont articulé hydraulique (9B), lesquelles sont vides au niveau du point de déchargement (1), soulèvent leurs clapets (13), mettent à niveau leurs ponts et descendent au gré de la marée, tandis que les vannes d'eau (14) de leurs quais séparés (16) sur la digue (15) sont ouvertes et que la marée se retire, jusqu'au point de collecte (6) ;
dans une étape ultérieure, les poids ronds (4) déchargés par les barges (9A) à pont articulé hydraulique se dirigent en roulant vers la première pente (2) où ils sont contrôlés et guidés par les barrières de guidage automatisées (18) qui les orientent vers l'ouverture supérieure (3) dans laquelle ils tombent à une vitesse contrôlée de 1 par seconde et sur la roue de poche (3C) reliée au générateur par l'arbre d'entraînement, produisant ainsi de l'électricité ;
lors d'une autre étape, les poids ronds sortent de l'ouverture inférieure (3A) après être passés par la roue de poche (3C) pour descendre ensuite la deuxième pente (7) vers le deuxième ensemble de barrières de guidage automatisées (19) où ils sont contrôlés et guidés vers le point de collecte inférieur (6) ;
lors d'une autre étape, les poids ronds (4) roulent par-dessus le clapet (17) du point de collecte (6) et entrent dans les barges (9C) à pont articulé hydraulique qui attendent au point de collecte (6) à un niveau d'eau bas pour leurs quais séparés (16) avec les vannes d'eau (14) sur la digue (15) fermées ;
l'arrivée de barges (9B) à pont articulé hydraulique au point de collecte (6) coïncide avec la dernière étape, les vannes d'eau (14) de leurs quais séparés (16) se ferment alors et le clapet (17) du point de collecte (6) est abaissé sur les barges à pont articulé hydraulique (9B), les barrières de guidage automatisées (19) de la deuxième pente (5) ne sont pas ouvertes tant que les barrières de guidage automatisées (19) des barges à pont articulé hydraulique (9C) ne sont pas fermées, aucun poids rond (4) n'est collecté tant que les clapets (17) du point de collecte (6) ne sont pas relevés sur les barges à pont articulé hydraulique (9C) et que leurs vannes d'eau (14) ne sont pas ouvertes ;
à l'étape suivante, les barges à pont articulé hydraulique (9C) montent avec la marée et les barges à pont articulé hydraulique (9B) commencent alors à collecter les poids ronds (4) au niveau du point de collecte (6) et toutes les étapes précédentes sont alors répétées.
